# FASCICULE DE BREVET EUROPEEN

(11) **EP 4 469 694 B1**
(45) Date de publication et mention de la délivrance du brevet: **22.10.2025**
(21) Numéro de dépôt: 23706399.5
(22) Date de dépôt: 24.01.2023
(51) Int. Cl.: F16C 17/02, F16C 33/10

(54) **PALIER LISSE POUR UNE TURBOMACHINE D'AERONEF**
GLEITLAGER FÜR EINE FLUGZEUGTURBOMASCHINE
PLAIN BEARING FOR AN AIRCRAFT TURBOMACHINE

(30) Priorité: 28.01.2022 FR 2200768
(43) Date de publication de la demande: 04.12.2024
(73) Titulaire: Safran Transmission Systems, 92700 Colombes (FR)
(72) Inventeur: SIMON, Adrien Louis, 77550 MOISSY-CRAMAYEL (FR)
(74) Mandataire: Gevers & Orès
(86) Numéro de dépôt international: PCT/FR2023/050091
(87) Numéro de publication internationale: WO 2023/144485

(56) Documents cités:
- EP-A1- 2 383 480
- DE-U- 1 985 822
- US-A1- 2014 254 966
- US-B2- 10 436 249
- US-B2- 6 966 700

## Description

### Domaine technique de l'invention

La présente invention concerne un palier lisse pour une turbomachine d'aéronef, ainsi qu'un réducteur mécanique comportant ce type de palier lisse.

### Arrière-plan technique

L'état de l'art comprend notamment les documents FR-A1-2 995 055, FR-A1-3 071 022, WO-A1-2014/037659, DE-U-19 85 822, US-A1-2014/254966, EP-A1-2 383 480, US-B2-10,436,249 et US-B2-6,966,700. Le rôle d'un réducteur mécanique est de modifier le rapport de vitesse et de couple entre l'axe d'entrée et l'axe de sortie d'un système mécanique.

Les nouvelles générations de turbomachines à plusieurs flux, notamment celles ayant un haut taux de dilution, comportent un réducteur mécanique pour entraîner l'arbre d'une soufflante (aussi appelé « fan ») ou d'une hélice (également « propeller »). De manière usuelle, le réducteur a pour but de transformer la vitesse de rotation dite rapide de l'arbre d'une turbine de puissance en une vitesse de rotation plus lente pour l'arbre entraînant la soufflante ou l'hélice.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à plusieurs flux, les réducteurs sont de type planétaire ou épicycloïdal. Il existe dans d'autres applications similaires, des architectures dites différentielles ou encore « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Les satellites sont guidés en rotation par des paliers qui peuvent être des paliers lisses ou des paliers à roulement. La présente demande concerne un palier lisse qui peut être utilisé pour le guidage d'un satellite ou de tout autre élément mécanique d'une turbomachine. Dans la présente demande, palier lisse et palier hydrodynamique ont la même signification.

Un palier lisse ou hydrodynamique comprend un corps tubulaire dont la cavité interne est alimentée en huile de lubrification. L'huile alimente la cavité interne et est acheminée par un canal d'alimentation jusqu'à une rainure principale de lubrification formée sur une surface cylindrique externe du corps.

La rainure principale de lubrification est située sur une partie médiane de la surface externe du corps et a une forme rectiligne et allongée le long de l'axe principal du palier lisse qui est l'axe de révolution de sa surface cylindrique.

Dans le cas du guidage d'un satellite, le satellite comprend une surface cylindrique interne qui s'étend autour de la surface externe du corps du palier. En position normale de fonctionnement, la surface interne du satellite recouvre et ferme la rainure de lubrification. Toutefois, en fonctionnement, le satellite peut se déplacer axialement sur le palier lisse. Lors de ces déplacements, le satellite peut adopter une position axiale sur le palier lisse dans laquelle la surface interne du satellite ne recouvre plus une extrémité longitudinale de la rainure de lubrification, qui n'est donc plus fermée. L'huile contenue dans la rainure s'échappe alors de la rainure avec un débit important et non maitrisé. Les déplacements du satellite sur le palier lisse font donc craindre des fuites d'huile conséquentes au niveau du palier lisse et donc une surconsommation d'huile.

Une solution à ce problème pourrait consister à réduire la longueur de la rainure d'alimentation pour éviter qu'elle soit découverte lors des déplacements relatifs du satellite et du palier lisse. Cependant, cette solution ne serait pas satisfaisante car elle ne permettrait pas de garantir une lubrification efficace du palier. Les extrémités longitudinales du palier risqueraient en effet de ne pas être suffisamment lubrifiées, ce qui pourrait entraîner un grippage par contact entre le satellite et le palier, et réduire la durée de vie du palier.

La présente invention propose une solution à ce problème de la technique antérieure, qui est simple, efficace et économique.

### Résumé de l'invention

L'invention concerne un palier lisse pour une turbomachine d'aéronef, ce palier lisse comportant un corps tubulaire d'axe principal et comprenant :
- une surface cylindrique externe s'étendant autour de l'axe sur une majeure partie d'une dimension axiale du corps,
- deux embouts tubulaires de montage situés respectivement à deux extrémités opposées du corps le long de l'axe,
- une cavité interne destinée à recevoir de l'huile et débouchant au centre d'au moins un des embouts,
- une rainure principale de lubrification qui est creusée sur la surface externe d'une partie médiane du corps et qui a une forme allongée le long de l'axe, et
- un canal principal d'alimentation en huile de la rainure principale, qui assure une communication fluidique entre la cavité et la rainure principale,

caractérisé en ce que le corps comprend deux parties d'extrémité opposées et séparées l'une de l'autre par la partie médiane du corps, au moins une de ces parties d'extrémité comportant une rainure secondaire de lubrification qui est creusée dans la surface externe et qui présente une forme allongée le long de l'axe et qui est fluidiquement indépendante de la rainure principale,
et en ce que le corps comprend en outre un canal secondaire d'alimentation en huile de la ou chaque rainure secondaire, qui assure une communication fluidique entre la cavité et la rainure secondaire.

Le palier lisse comporte ainsi une rainure principale de lubrification et au moins une rainure secondaire de lubrification. Les rainures principale et secondaire(s) sont indépendantes, c'est-à-dire qu'elles ne communiquent pas entre elles et sont alimentées par des canaux distincts. La rainure principale s'étend sur la partie médiane du corps et la ou chaque rainure secondaire s'étend sur une partie d'extrémité du corps, ce qui permet de lubrifier une majeure partie de la longueur de la surface externe du corps en fonctionnement. Par ailleurs, en cas de déplacements d'un satellite par exemple sur le palier lisse, la rainure secondaire ou une des rainures secondaires est susceptible de ne plus être recouverte par le satellite. De l'huile va s'échapper et fuir de la rainure secondaire. Cependant, comme cette rainure secondaire est alimentée par un canal qui a une section de passage plus faible que celle du canal d'alimentation de la rainure principale, l'huile va s'échapper avec un débit plus faible. Une majeure partie de l'huile d'alimentation du palier va continuer à alimenter la rainure principale et une faible partie de cette huile d'alimentation va fuir à travers la rainure secondaire découverte. La diminution de la section de passage précitée permet de maintenir une pression suffisante dans la cavité interne du palier pour garantir l'alimentation en huile de la rainure principale, ce qui réduit le risque de grippage.

L'invention permet ainsi de garantir l'alimentation en huile de la rainure principale et de limiter les fuites d'huile aux extrémités longitudinales du palier lisse lors des déplacements relatifs entre le palier lisse et l'élément qu'il guide.

L'invention est compatible d'un réducteur simple étage ou à plusieurs étages. Elle est compatible d'un réducteur dit épicycloïdal, planétaire ou différentiel. Elle est compatible de dentures en chevrons notamment. Enfin, elle est compatible de tout type de porte-satellites qu'il soit monobloc ou de type cage et porte-cage.

Le palier lisse selon l'invention peut comprendre une ou plusieurs des caractéristiques suivantes, prises isolément les unes des autres, ou en combinaison les unes avec les autres :
- le corps du palier lisse est monobloc
- ledit canal secondaire a une section minimale de passage inférieure à celle du canal principal ;
- les rainures principale et secondaire(s) sont rectilignes et parallèles ;
- la ou chaque rainure secondaire a une dimension longitudinale inférieure à celle de la rainure principale, et de préférence inférieure à la moitié de celle de la rainure principale ;
- la ou chaque rainure secondaire se prolonge jusque dans la surface externe de la partie médiane du corps pour créer une zone de chevauchement mutuel avec la rainure principale ;
- le canal principal est dépourvu de restricteur ;
- le ou chaque canal secondaire comprend un restricteur qui est rapporté et fixé sur le corps ; dans la présente demande, on entend par restricteur (de fluide) un dispositif qui est utilisé pour réduire la section de passage d'un fluide ; un restricteur autorise le passage de fluide mais de façon limitée ou maîtrisée ; dans le cas d'une turbomachine d'aéronef, un restricteur est logé dans un alésage d'une pièce afin de maîtriser la quantité de fluide passant dans cet alésage par exemple ;
- le canal principal est situé sensiblement au milieu de la rainure principale, et le canal secondaire est situé à une extrémité longitudinale du ou de chaque rainure secondaire, cette extrémité longitudinale étant située du côté de la rainure principale ;
- le palier comprend une rainure principale et deux rainures secondaires, les deux rainures secondaires étant alignées axialement l'une avec l'autre et étant situées à une distance prédéterminée de la rainure principale ;
- la distance est inférieure ou égale à une largeur de la rainure principale ;
- la rainure principale a une largeur qui est comprise entre 1.D1 et 2.D1, D1 étant un diamètre interne dudit canal principal ;
- la ou chaque rainure secondaire a une largeur qui est comprise entre 1.D2 et 3.D2, D2 étant un diamètre interne dudit canal secondaire.

La présente invention concerne également un ensemble comportant un palier lisse selon l'une des revendications précédentes, et un satellite de réducteur mécanique, ce satellite comportant un corps tubulaire ayant un axe principal et comprenant :
- au moins une denture externe s'étendant autour de l'axe, et
- une surface cylindrique interne s'étendant autour de l'axe sur une majeure partie d'une dimension axiale du corps, cette surface interne étant destinée à s'étendre autour de la surface externe du corps du palier lisse.

Avantageusement, la surface interne du corps du satellite a une longueur inférieure à celle de la surface externe du corps du palier lisse, et dans lequel les rainures principale et secondaire(s) s'étendent sur une dimension longitudinale du corps du palier lisse qui est comprise entre 95%.L1 et 99%.L1, L1 étant la longueur de la surface interne du corps du satellite.

La présente invention concerne également un réducteur mécanique de turbomachine, en particulier d'aéronef, comportant un solaire, une couronne s'étendant autour du solaire, et des ensembles tels que décrits ci-dessus, les satellites de ces ensembles étant engrenés avec le solaire et la couronne.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue schématique partielle en coupe axiale d'un réducteur mécanique,
[Fig. 3] la figure 3 est une vue schématique en perspective et coupe axiale d'un palier lisse et d'un satellite d'un réducteur mécanique,
[Fig. 4] la figure 4 est une vue schématique en perspective du palier lisse de la figure 3,
[Fig. 5a-5c] les figures 5a-5c sont des demi vues très schématiques en coupe axiale d'un palier lisse et d'un satellite selon la technique antérieure, et illustrent différentes positions axiales du satellite sur le palier lisse,
[Fig. 6a-6c] les figures 6a-6c sont des demi vues très schématiques en perspective et en coupe axiale d'un palier lisse et d'un satellite selon l'invention, et illustrent différentes positions axiales du satellite sur le palier lisse,
[Fig. 7] la figure 7 est une vue à plus grande échelle d'une partie de la figure 6c,
[Fig. 8] la figure 8 est une vue à encore plus grande échelle d'une partie de la figure 6c,
[Fig. 9a-9c] les figures 9a-9c sont des vues similaires à celles des figures 6a-6c et illustrent différentes positions axiales du satellite sur le palier lisse dans le cadre de la présente invention.

### Description détaillée de l'invention

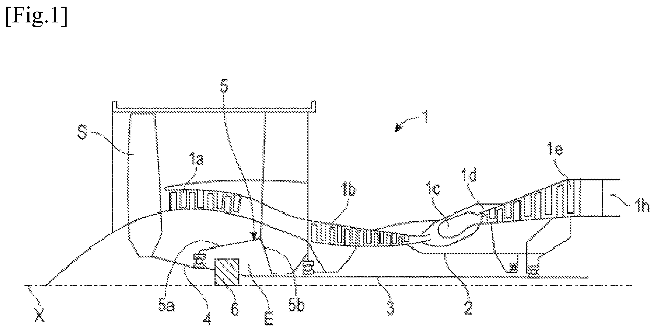

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

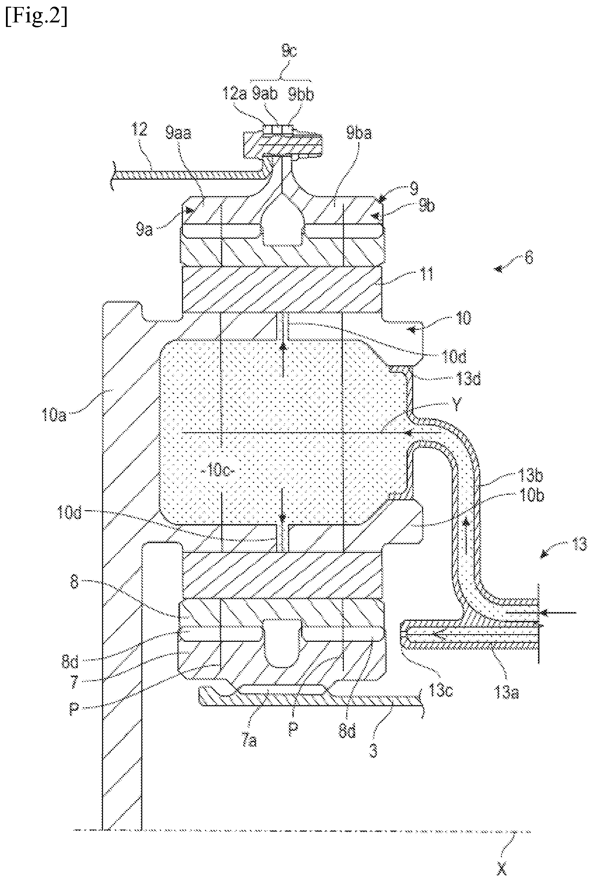

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier lisse hydrodynamique. Dans le cas d'un palier lisse, le palier 11 comprend un corps tubulaire 10b et les corps tubulaires des différents paliers lisses sont positionnés les uns par rapport aux autres et sont portés par un châssis structurel 10a du porte-satellites 10. Il existe un nombre de paliers 11 égal au nombre de satellites 8. Pour des raisons de fonctionnement, de montage, de fabrication, de contrôle, de réparation ou de rechange, les paliers 11 (et en particulier les corps tubulaires 10b) et le châssis 10a peuvent être séparés en plusieurs pièces.

Pour les mêmes raisons citées précédemment, la denture 8d d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en deux parties en général chacune répétée du même nombre de satellites. Les injecteurs 13a ont pour fonction de lubrifier les dentures et les bras 13b ont pour fonction de lubrifier les paliers 11. L'huile est amenée vers des injecteurs 13a pour ressortir par des extrémités 13c afin de lubrifier par de l'huile les dentures des satellites 8, du solaire 7 et aussi de la couronne 9. L'huile est également amenée vers le bras 13b et circule via la bouche d'alimentation 13d du corps 10b dans une cavité interne 10c de ce dernier. L'huile circule ensuite dans cette cavité 10c pour alimenter des orifices 10d de passage d'huile jusqu'à une surface cylindrique externe de guidage du satellite correspondant.

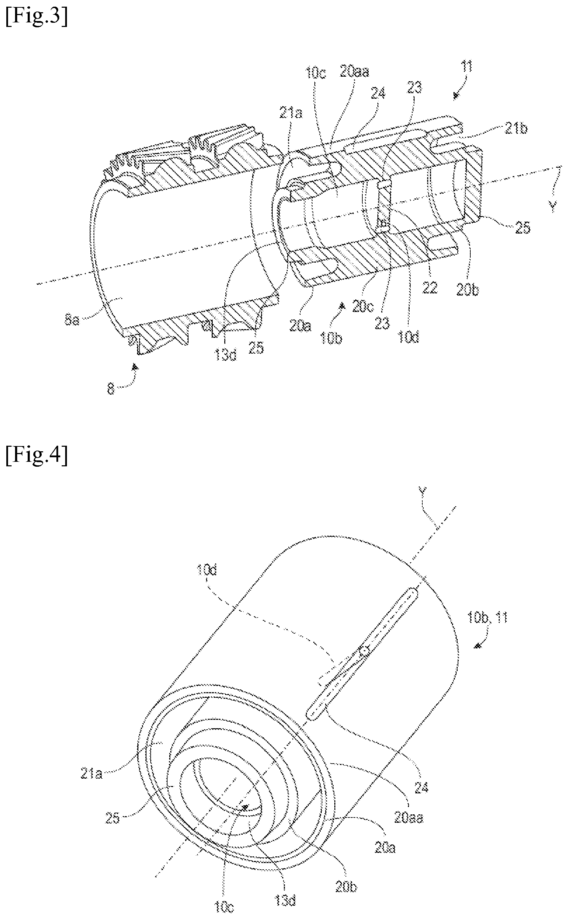

Les figures 3 et 4 montrent un exemple plus concret de réalisation d'un palier lisse 11 et de son corps tubulaire 10b pour un satellite 8 de réducteur.

Le corps tubulaire 10b comprend deux parois annulaires 20a, 20b coaxiales qui s'étendent l'une autour de l'autre et qui sont reliées entre elles par une âme annulaire 20c.

La paroi annulaire interne 20b a des extrémités axiales définissant des embouts tubulaires 25 de montage sur le porte-satellites 10. Au moins une de ces extrémités axiales est ouverte pour définir également la bouche d'alimentation 13d précitée destinée à recevoir de l'huile apportée par le distributeur (non représenté). La paroi interne 20b définit en outre la cavité interne 10c de réception de l'huile de lubrification.

La paroi annulaire externe 20a a une longueur ou dimension axiale mesurée le long de l'axe Y, qui est proche de celle de la paroi 20b. La paroi 20a comprend une surface cylindrique externe 20aa qui est configurée pour délimiter avec une surface cylindrique interne 8a du palier 8 un espace annulaire de réception d'huile et de formation d'un film d'huile en vue de la formation du palier lisse ou hydrodynamique 11.

L'âme 20c a une longueur plus petite mesurée de la même façon, si bien que les extrémités axiales des parois 20a, 20b délimitent entre elles des rainures annulaires 21a, 21b. Cette configuration permet de conférer une certaine souplesse au corps 10b, au niveau de chacune de ses extrémités axiales.

Le corps 10b comprend en outre une cloison transversale 22 située dans la cavité 10c, sensiblement en son milieu par rapport à l'étendue de la cavité le long de l'axe Y. Cette cloison 22 est reliée à sa périphérie à la surface interne de la paroi 20a et comprend des conduits 23 de mise en communication fluidique des deux portions de la cavité 10c entre lesquelles s'étend la cloison 22.

Le corps 10b comprend au moins un canal principal 10d de passage d'huile de lubrification depuis la cavité 10c jusqu'à la périphérie externe du corps 10b, et en particulier jusqu'à une rainure principale de lubrification 24 formée ou creusée dans la surface 20aa (cf. figure 4).

Dans l'exemple représenté, ce canal 10d est formé au milieu du corps 10b, par rapport à l'étendue du corps le long de l'axe Y, et s'étend depuis l'un des conduits 23 jusqu'à la surface 20aa en traversant la cloison 23, la paroi interne 20b, l'âme 20c et enfin la paroi externe 20a.

La cavité 10c est alimentée en huile en continu en fonctionnement. Cette huile pénètre dans la cavité 10c puis dans les conduits 23 et est acheminée par le canal principal 10d jusqu'à la rainure de lubrification 24. Les forces centrifuges appliquées au porte-satellites 10 et aux corps 10b en fonctionnement suffisent à assurer cette circulation d'huile.

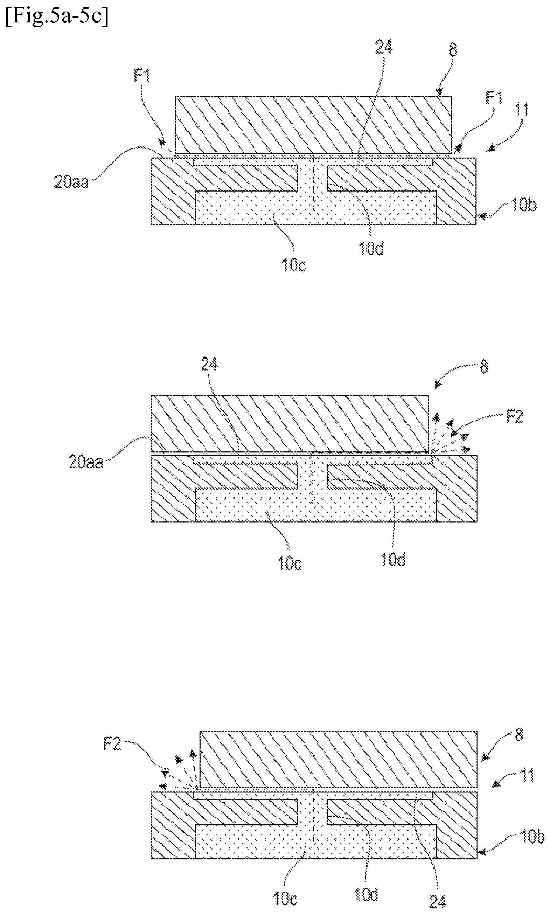

La rainure de lubrification 24 s'étend sur une majeure partie de la longueur du corps 10b du palier lisse 11 et est fermée par la surface interne 8a du satellite 8 lorsque ce dernier est dans sa position normale de fonctionnement illustrée à la figure 5a. L'huile de lubrification qui alimente la rainure principale 24 circule entre les surfaces 20aa, 8a et s'échappe aux extrémités longitudinales du palier 11 avec un débit maîtrisé (flèches F1 à la figure 5a).

Comme évoqué dans ce qui précède, en fonctionnement, le satellite 8 peut subir des déplacements en direction axiale et adopter des positions extrêmes illustrées aux figures 5b et 5c dans lesquelles une extrémité axiale de la rainure principale 24 peut ne plus être recouverte par le satellite 8 et libérer de l'huile avec un débit trop important. Dans la figure 5b, le satellite 8 a adopté une position axiale extrême dans laquelle une première extrémité longitudinale de la rainure 24 (à droite sur le dessin) est mise à nue et des fuites d'huile non maîtrisées ont lieu au niveau de cette extrémité (flèches F2). Dans la figure 5c, le satellite 8 a adopté une position axiale extrême opposée dans laquelle une seconde extrémité longitudinale opposée de la rainure 24 (à gauche sur le dessin) est mise à nue et des fuites d'huile non maîtrisées ont lieu au niveau de cette extrémité (flèches F2).

La présente invention propose une solution à ce problème.

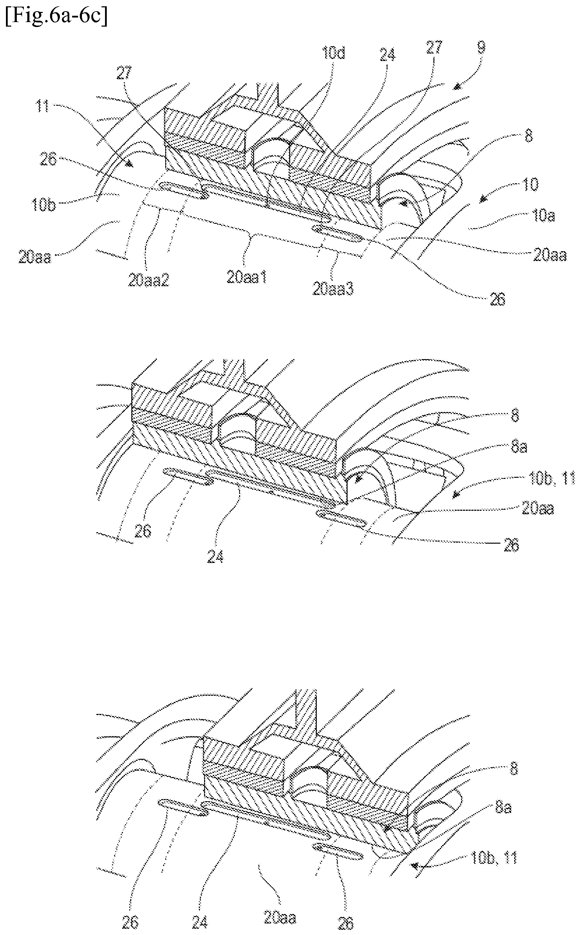

Un mode de réalisation de l'invention est illustré aux figures 6a et suivantes.

Le palier lisse 11 selon l'invention comprend un corps tubulaire 10b, de préférence monobloc, ayant un axe principal Y et comprenant :
- une surface cylindrique externe 20aa s'étendant autour de l'axe Y sur une majeure partie d'une dimension axiale du corps 10b (au moins 90% dans l'exemple représenté),
- deux embouts tubulaires 25 de montage situés respectivement à deux extrémités opposées du corps 10b le long de l'axe Y,
- une cavité interne 10c destinée à recevoir de l'huile et débouchant au centre d'au moins un des embouts 25,
- une rainure principale 24 de lubrification qui est formée ou creusée sur la surface externe 20aa d'une partie médiane 20aa1 du corps 10b et qui a une forme allongée, et de préférence rectiligne, le long de l'axe Y, et
- un canal principal 10d d'alimentation en huile de la rainure principale 24, qui assure une communication fluidique entre la cavité 10c et la rainure principale 14.

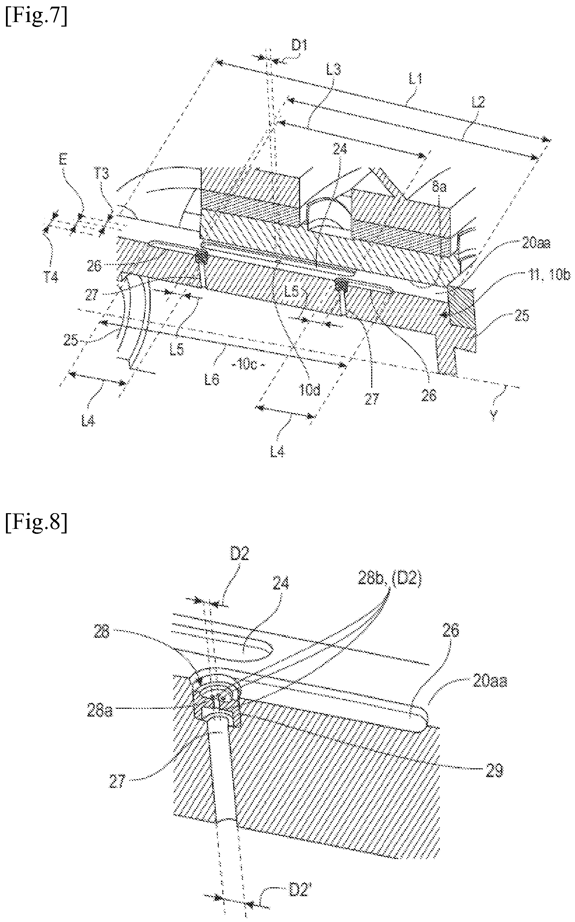

Dans l'exemple représenté, la surface interne 8a du corps du satellite 8 a une longueur L1 mesurée le long de l'axe Y. La surface externe 20aa du corps 10b du palier 11 a une longueur L2 mesuré le long de l'axe Y (cf. figure 7).

La rainure principale 24 a une longueur L3 mesurée le long de l'axe Y et une largeur T3 mesurée dans un plan perpendiculaire à cet axe (figure 7).

On constate dans l'exemple représenté que le canal principal 10d alimente la rainure principale 24 en son milieu. Le canal principal 10d peut avoir un diamètre interne constant, noté D1.

Les figures permettent de constater que :
- L2 est inférieure à L1 et représente par exemple 60 à 90% de L1,
- L3 est inférieure à L2 et représente par exemple 60 à 80% de L2,
- D1 est inférieur à T3 ; de préférence 1.D1 < T3 < 3.D1,
- L3 est comprise entre 10.T3 et 50.T3.

Ces paramètres sont toutefois facultatifs. Ils peuvent être combinés ou pris isolément les uns des autres dans le cadre de la présente invention. Ils présentent chacun des avantages en termes de circulation et de consommation d'huile.

Selon l'invention, le corps comprend deux parties d'extrémité opposées 20aa2, 20aa3 et séparées l'une de l'autre par la partie médiane 20aa1 du corps 10b. Au moins une de ces parties d'extrémité 20aa2, 20aa3 comporte une rainure secondaire 26 de lubrification qui est creusée dans la surface externe 20aa et qui présente a une forme allongée, et de préférence rectiligne, le long de l'axe Y et qui est indépendante de la rainure principale 24. Les rainures 24, 26 sont de préférence parallèles entre elles et à l'axe Y.

Dans l'exemple représenté, chacune des parties d'extrémité 20aa2, 20aa3 comprend une rainure secondaire 26. Le palier lisse 11 comprend ainsi une rainure principale 24 et deux rainures secondaires 26. En variante, le palier lisse 11 pourrait comprendre une rainure secondaire 26 sur une seule de ses parties d'extrémité 20aa2, 20aa3.

Le corps 10b du palier lisse 11 comprend en outre un canal secondaire 27 d'alimentation en huile de la ou chaque rainure secondaire 26, qui assure une communication fluidique entre la cavité 10c et la rainure secondaire 26. Chaque rainure secondaire 26 a une longueur L4 mesurée le long de l'axe Y et une largeur T4 mesurée dans un plan perpendiculaire à cet axe.

On constate dans l'exemple représenté que le canal secondaire 27 alimente chaque rainure secondaire 26 par l'une de ses extrémités longitudinales. C'est l'extrémité longitudinale située du côté de la rainure principale 24 ou de l'autre rainure secondaire 26, qui est alimentée par le canal secondaire 27. On comprend ainsi, qu'en cas de mise à nue de l'une des rainures secondaires 26, c'est l'extrémité longitudinale de cette rainure opposée à son extrémité alimentée en huile, qui sera mise à nue, ce qui est avantageux pour limiter les fuites d'huile en fonctionnement.

Chaque canal secondaire 27 peut avoir un diamètre interne constant, noté D2.

Les figures permettent de constater que :
- L4 est inférieure à L3 et représente par exemple 20 à 50% de L3,
- T4 est similaire voir identique à T3 ; de préférence, 1.D2 < T3 < 3.D2.

Par ailleurs, on note E la distance entre chaque rainure secondaire 26 et la rainure principale, mesurée dans un plan perpendiculaire à l'axe Y. Cette distance E est maîtrisée et est ici inférieure à T3 et T4. Par ailleurs, dans l'exemple représenté, les deux rainures secondaires 26 sont situées d'un même côté de la rainure principale 24 et sont alignées axialement l'une avec l'autre donc la distance E est identique pour les deux rainures secondaires 26.

Le canal secondaire 27 d'alimentation de chaque rainure secondaire 26 a de préférence une section minimale de passage inférieure à celle du canal principal 10c. Cette section minimale peut être obtenue par un canal 27 de plus petit diamètre interne D2 (c'est-à-dire D2 est inférieur ou égal à D1). Avantageusement, cette section de passage est obtenue par un restricteur de fluide 28 qui est rapporté et fixé dans chaque canal secondaire 27. Dans ce dernier cas, le diamètre interne D2' propre de chaque canal secondaire 27 peut être similaire ou identique au diamètre interne D1 du canal principal 26 et la section minimale de passage dans chaque canal secondaire 27 est définie par le restricteur 28 (cf. figure 8). D2' est ici inférieur à T4.

Les figures 7 et 8 permettent de visualiser que chacun des restricteurs 28 est ici monté dans un alésage 29 du corps 10b situé à l'intersection entre la rainure secondaire 26 et son canal 27. Le restricteur 28 peut être fretté dans l'alésage 29 par exemple. L'alésage 29 a ici un diamètre supérieur à D2' et inférieur à la largeur T4.

Chaque restricteur 28 peut comprendre un corps tubulaire et monobloc comportant une cloison transversale 28a percée avec un ou plusieurs orifices 28b de diamètre interne D3 prédéterminé. On comprend ainsi que le restricteur 28 réduit la section de passage dans le canal 27 dans lequel il est monté. En amont du restricteur 28, la section de passage est égale à π. (D2/2)². Au niveau du restricteur 28, la section de passage devient k.π.(D3/2)², avec k le nombre d'orifices 28b.

Avantageusement, les rainures principale 24 et secondaire(s) 26 se chevauchent axialement mutuellement comme illustré aux figures 6 et 7. Cela signifie que chaque rainure secondaire 26 s'étend axialement jusque dans la surface externe 28aa de la partie médiane 28aa1 pour avoir une partie d'extrémité qui chevauche (en direction tangentielle autour de l'axe Y) une partie d'extrémité de la rainure principale 24.

La longueur de chevauchement est notée L5 et peut représenter entre 10 et 30% de L4 (cf. figure 7).

Quelle que soit la position du satellite 8, dans la mesure où il recouvre la rainure principale 24, il recouvrira au moins une partie de la ou chaque rainure secondaire 26. Cela permet de garantir une lubrification continue du palier lisse sur toute l'étendue des rainures.

On désigne par L6 la dimension longitudinale du corps 10b du palier lisse 11 sur laquelle s'étendent les rainures principale 24 et secondaire(s) 26. On comprend que dans l'exemple représenté L6 est égale à L3+2.L4-2.L5.

Avantageusement, L6 est comprise entre 95%.L1 et 99%.L1, ce qui permet aux rainures d'alimenter directement la quasi-totalité de la longueur de la surface interne 8a du satellite 8.

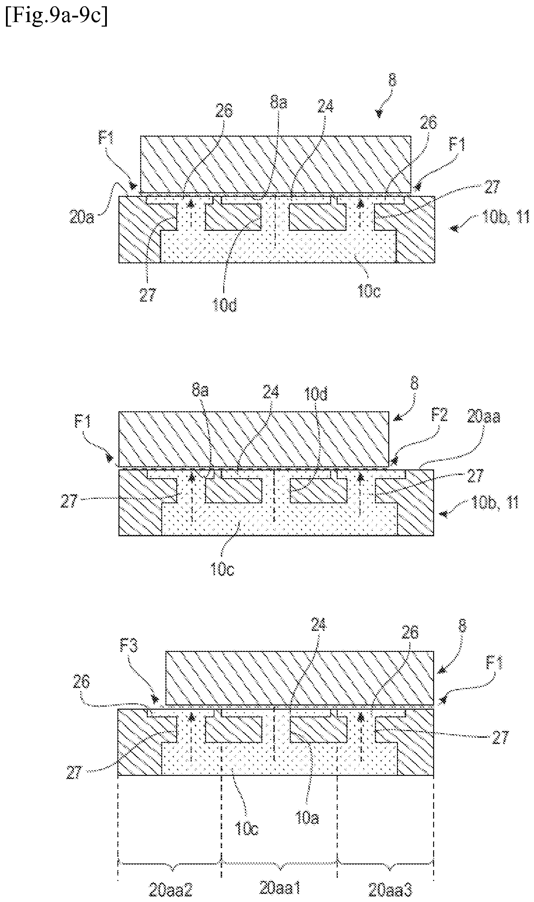

Les figures 6a à 6c et 9a à 9c montrent des positions axiales relatives d'un satellite 8 sur le palier lisse 11 selon le mode de réalisation décrit ci-dessus.

En position normale de fonctionnement (figures 6a et 9a), le satellite 8 est situé au milieu du palier lisse 11 et les rainures 24, 26 sont fermées par la surface interne 8a du satellite 8. L'huile de lubrification qui alimente les rainures 24, 26 circule entre les surfaces 20aa, 8a et s'échappe aux extrémités longitudinales du palier 11 avec un débit maîtrisé (flèches F1).

Dans les figures 6b et 9b, le satellite 8 a adopté une position axiale extrême dans laquelle une partie de l'une des rainures 26 (à gauche sur le dessin) est mise à nue et des fuites d'huile maîtrisées ont lieu au niveau de cette extrémité (flèches F3) grâce à la restriction du diamètre ou de la section de passage du canal secondaire 27. Dans la figure 6c et 9c, le satellite 8 a adopté une position axiale extrême opposée dans laquelle une partie de l'autre des rainures 26 (à droite sur le dessin) est mise à nue et des fuites d'huile maîtrisées ont lieu au niveau de cette extrémité (flèches F3) grâce à la restriction du diamètre ou de la section de passage du canal secondaire 27. Quelle que soit la position axiale du satellite 8 sur le palier 11, la rainure principale 24 est donc toujours couverte par le satellite 8 et alimente en continu et à un débit suffisant l'interface entre le palier 11 et le satellite 8.

La restriction du diamètre ou de la section de passage dans chaque canal secondaire 27 permet de limiter la fuite à un débit à peine supérieur au débit nécessaire au fonctionnement du palier 11 (par exemple supérieur de l'ordre de 5% par exemple). Elle permet également de maintenir une pression suffisante dans la cavité interne 10c du palier 11 pour garantir l'alimentation en huile de la rainure principale 24, ce qui réduit le risque de grippage.

Dans le cas de l'utilisation du palier 11 selon l'invention dans un réducteur mécanique 6, le débit suffisant au réducteur est ainsi connu et contrôlé dans toutes les phases de vol et ne nécessite pas de surdimensionner le circuit pour les phases à fort déplacement.

## Revendications

1. Palier lisse (11) pour une turbomachine d'aéronef, ce palier lisse (11) comportant un corps (10b) tubulaire d'axe principal (Y) et comprenant :
- une surface cylindrique externe (20aa) s'étendant autour de l'axe (Y) sur une majeure partie d'une dimension axiale du corps (10b),
- deux embouts tubulaires (25) de montage situés respectivement à deux extrémités opposées du corps (10b) le long de l'axe (Y),
- une cavité interne (10c) destinée à recevoir de l'huile et débouchant au centre d'au moins un des embouts (25),
- une rainure principale (24) de lubrification qui est creusée sur la surface externe (20aa) d'une partie médiane (20aa1) du corps (10b) et qui a une forme allongée le long de l'axe (Y), et
- un canal principal (10d) d'alimentation en huile de la rainure principale (24), qui assure une communication fluidique entre la cavité (10c) et la rainure principale (24),
**caractérisé en ce que** le corps (10b) comprend deux parties d'extrémité (20aa2, 20aa3) opposées et séparées l'une de l'autre par la partie médiane (20aa1) du corps (10b), au moins une de ces parties d'extrémité (20aa2, 20aa3) comportant une rainure secondaire (26) de lubrification qui est creusée dans la surface externe (20aa) et qui présente une forme allongée le long de l'axe (Y) et qui est fluidiquement indépendante de la rainure principale (24), la ou chaque rainure secondaire (26) ayant une dimension longitudinale (L4) inférieure à celle (L3) de la rainure principale (24), la ou chaque rainure secondaire (26) se prolongeant jusque dans la surface externe (20aa) de la partie médiane (20aa1) du corps (10b) pour créer une zone de chevauchement mutuel avec la rainure principale (26),
et **en ce que** le corps (10b) comprend en outre un canal secondaire (27) d'alimentation en huile de la ou chaque rainure secondaire (26), qui assure une communication fluidique entre la cavité (10c) et la rainure secondaire (26), ledit canal secondaire (27) ayant une section minimale de passage inférieure à celle du canal principal (10d).

2. Palier lisse (11) selon la revendication 1, dans lequel les rainures principale (24) et secondaire(s) (26) sont rectilignes et parallèles.

3. Palier lisse (11) selon l'une des revendications précédentes, dans lequel la ou chaque rainure secondaire (26) a une dimension longitudinale (L4) inférieure à la moitié de celle (L3) de la rainure principale (24).

4. Palier lisse (11) selon l'une des revendications précédentes, dans lequel le canal principal (10d) est dépourvu de restricteur.

5. Palier lisse (11) selon l'une des revendications 1 à 4, dans lequel le ou chaque canal secondaire (27) comprend un restricteur (28) qui est rapporté et fixé sur le corps (10d).

6. Palier lisse (11) selon l'une des revendications précédentes, dans lequel le canal principal (10d) est situé sensiblement au milieu de la rainure principale (24), et le canal secondaire (27) est situé à une extrémité longitudinale du ou de chaque rainure secondaire (26), cette extrémité longitudinale étant située du côté de la rainure principale (24).

7. Palier lisse (11) selon l'une des revendications précédentes, dans lequel il comprend une rainure principale (24) et deux rainures secondaires (26), les deux rainures secondaires (26) étant alignées axialement l'une avec l'autre et étant situées à une distance (E) prédéterminée de la rainure principale.

8. Palier lisse (11) selon la revendication précédente, dans lequel la distance (E) est inférieure ou égale à une largeur (T3) de la rainure principale (24).

9. Palier lisse (11) selon l'une des revendications précédentes, dans lequel le corps du palier lisse est monobloc.

10. Palier lisse (11) selon l'une des revendications précédentes, dans lequel la rainure principale (24) a une largeur (T3) qui est comprise entre 1.D1 et 2.D1, D1 étant un diamètre interne dudit canal principal (10d).

11. Palier lisse (11) selon l'une des revendications précédentes, dans lequel la ou chaque rainure secondaire (26) a une largeur (T4) qui est comprise entre 1.D2 et 3.D2, D2 étant un diamètre interne dudit canal secondaire (27).

12. Ensemble comportant un palier lisse (11) selon l'une des revendications précédentes, et un satellite (8) de réducteur mécanique (6), ce satellite (8) comportant un corps tubulaire ayant un axe principal (Y) et comprenant :
- au moins une denture externe (8d) s'étendant autour de l'axe (Y), et
- une surface cylindrique interne (8a) s'étendant autour de l'axe (Y) sur une majeure partie d'une dimension axiale du corps, cette surface interne (8a) étant destinée à s'étendre autour de la surface externe (20aa) du corps (10b) du palier lisse (11).

13. Ensemble selon la revendication 12, dans lequel la surface interne (8a) du corps du satellite (8) a une longueur (L1) inférieure à celle (L2) de la surface externe (20aa) du corps (10b) du palier lisse (11), et dans lequel les rainures principale (24) et secondaire(s) (26) s'étendent sur une dimension longitudinale (L5) du corps (10b) du palier lisse (11) qui est comprise entre 95%.L1 et 99%.L1, L1 étant la longueur de la surface interne (8a) du corps du satellite (8).

14. Réducteur mécanique (6) pour une turbomachine, en particulier d'aéronef, comportant un solaire (7), une couronne (9) s'étendant autour du solaire (7), et des ensembles selon la revendication 12 ou 13, les satellites (8) de ces ensembles étant engrenés avec le solaire (7) et la couronne (9).

15. Turbomachine (1), en particulier d'aéronef, comportant un réducteur mécanique (6) selon la revendication précédente.

## Patentansprüche

1. Gleitlager (11) für ein Luftfahrzeugturbotriebwerk, wobei dieses Gleitlager (11) einen rohrförmigen Körper (10b) mit Hauptachse (Y) umfasst und Folgendes umfasst:
- eine zylindrische Außenfläche (20aa), die sich auf einem Großteil einer axialen Abmessung des Körpers (10b) um die Achse (Y) erstreckt,
- zwei rohrförmige Endabdeckungen (25) zur Montage, die jeweils an zwei gegenüberliegenden Enden des Körpers (10b) entlang der Achse (Y) gelegen sind,
- einen inneren Hohlraum (10c), der dazu vorgesehen ist, Öl aufzunehmen, und in die Mitte mindestens einer der Endabdeckungen (25) mündet,
- eine Hauptnut (24) zur Schmierung, die auf der Außenfläche (20aa) eines mittleren Teils (20aa1) des Körpers (10b) eingetieft ist und die eine längliche Form entlang der Achse (Y) aufweist, und
- einen Hauptkanal (10d) zur Versorgung der Hauptnut (24) mit Öl, der eine Fluidkommunikation zwischen dem Hohlraum (10c) und der Hauptnut (24) gewährleistet,
**dadurch gekennzeichnet, dass** der Körper (10b) zwei gegenüberliegende und durch den mittleren Teil (20aa1) des Körpers (10b) voneinander getrennte Endteile (20aa2, 20aa3) umfasst, wobei mindestens eines dieser Endteile (20aa2, 20aa3) eine Nebennut (26) zur Schmierung umfasst, die auf der Außenfläche (20aa) eingetieft ist und die eine längliche Form entlang der Achse (Y) aufweist und die fluidisch von der Hauptnut (24) unabhängig ist, wobei die oder jede Nebennut (26) eine Längsabmessung (L4) aufweist, die kleiner ist als jene (L3) der Hauptnut (24), wobei die oder jede Nebennut (26) bis in die Außenfläche (20aa) des mittleren Teils (20aa1) des Körpers (10b) verlängert ist, um einen Bereich gegenseitiger Überlappung mit der Hauptnut (26) zu bilden,
und dadurch, dass der Körper (10b) weiter einen Nebenkanal (27) zur Versorgung der oder jeder Nebennut (26) mit Öl umfasst, der eine Fluidkommunikation zwischen dem Hohlraum (10c) und der Nebennut (26) gewährleistet, wobei der Nebenkanal (27) einen Mindestdurchflussquerschnitt aufweist, der kleiner ist als jener des Hauptkanals (10d).

2. Gleitlager (11) nach Anspruch 1, wobei die Hauptnut (24) und Nebennut(en) (26) geradlinig und parallel sind.

3. Gleitlager (11) nach einem der vorstehenden Ansprüche, wobei die oder jede Nebennut (26) eine Längsabmessung (L4) aufweist, die kleiner ist als die Hälfte jener (L3) der Hauptnut (24).

4. Gleitlager (11) nach einem der vorstehenden Ansprüche, wobei der Hauptkanal (10d) frei von einer Drosselung ist.

5. Gleitlager (11) nach einem der Ansprüche 1 bis 4, wobei der oder jeder Nebenkanal (27) eine Drossel (28) umfasst, die am Körper (10d) angefügt und befestigt ist.

6. Gleitlager (11) nach einem der vorstehenden Ansprüche, wobei der Hauptkanal (10d) im Wesentlichen in der Mitte der Hauptnut (24) gelegen ist und der Nebenkanal (27) an einem Längsende der oder jeder Nebennut (26) gelegen ist, wobei dieses Längsende auf der Seite der Hauptnut (24) gelegen ist.

7. Gleitlager (11) nach einem der vorstehenden Ansprüche, wobei es eine Hauptnut (24) und zwei Nebennuten (26) umfasst, wobei die zwei Nebennuten (26) axial zueinander ausgerichtet sind und in einem vorbestimmten Abstand (E) von der Hauptnut gelegen sind.

8. Gleitlager (11) nach dem vorstehenden Anspruch, wobei der Abstand (E) kleiner oder gleich einer Breite (T3) der Hauptnut (24) ist.

9. Gleitlager (11) nach einem der vorstehenden Ansprüche, wobei der Körper des Gleitlagers einstückig ist.

10. Gleitlager (11) nach einem der vorstehenden Ansprüche, wobei die Hauptnut (24) eine Breite (T3) aufweist, die zwischen 1.D1 und 2.D1 beträgt, wobei D1 ein Innendurchmesser des Hauptkanals (10d) ist.

11. Gleitlager (11) nach einem der vorstehenden Ansprüche, wobei die oder jede Nebennut (26) eine Breite (T4) aufweist, die zwischen 1.D2 und 3.D2 beträgt, wobei D2 ein Innendurchmesser des Nebenkanals (27) ist.

12. Anordnung, umfassend ein Gleitlager (11) nach einem der vorstehenden Ansprüche, und einen Satelliten (8) eines mechanischen Untersetzungsgetriebes (6), wobei dieser Satellit (8) einen rohrförmigen Körper umfasst, der eine Hauptachse (Y) aufweist und Folgendes umfasst:
- mindestens eine äußere Verzahnung (8d), die sich um die Achse (Y) erstreckt, und
- eine zylindrische Innenfläche (8a), die sich auf einem Großteil einer axialen Abmessung des Körpers um die Achse (Y) erstreckt, wobei diese Innenfläche (8a) dazu vorgesehen ist, sich um die Außenfläche (20aa) des Körpers (10b) des Gleitlagers (11) zu erstrecken.

13. Anordnung nach Anspruch 12, wobei die Innenfläche (8a) des Körpers des Satelliten (8) eine Länge (L1) aufweist, die kleiner ist als jene (L2) der Außenfläche (20aa) des Körpers (10b) des Gleitlagers (11) und wobei sich die Hauptnut (24) und die Nebennut(en) (26) über eine Längsabmessung (L5) des Körpers (10b) des Gleitlagers (11) erstrecken, die zwischen 95%.L1 und 99%.L1 beträgt, wobei L1 die Länge der Innenfläche (8a) des Körpers des Satelliten (8) ist.

14. Mechanisches Untersetzungsgetriebe (6) für ein Turbotriebwerk, insbesondere eines Luftfahrzeugs, umfassend ein Sonnenrad (7), eine Krone (9), die sich um das Sonnenrad (7) erstreckt, und Anordnungen nach Anspruch 12 oder 13, wobei die Satelliten (8) dieser Anordnungen mit dem Sonnenrad (7) und der Krone (9) in Eingriff stehen.

15. Turbotriebwerk (1), insbesondere eines Luftfahrzeugs, das ein mechanisches Untersetzungsgetriebe (6) nach dem vorstehenden Anspruch umfasst.

## Claims

1. A plain bearing (11) for an aircraft turbomachine, this plain bearing (11) comprising a tubular body (10b) with a main axis (Y) and comprising:
- an external cylindrical surface (20aa) extending around the axis (Y) over a major portion of an axial dimension of the body (10b),
- two tubular mounting end caps (25) located respectively at two opposite ends of the body (10b) along the axis (Y),
- an internal cavity (10c) configured to receive oil and opening into the center of at least one of the end caps (25),
- a main lubrication groove (24) which is recessed on the external surface (20aa) of a middle portion (20aa1) of the body (10b) and which has an elongate shape along the axis (Y), and
- a main channel (10d) for supplying oil to the main groove (24), which provides a fluid communication between the cavity (10c) and the main groove (24),
**characterized in that** the body (10b) comprises two opposite end portions (20aa2, 20aa3) separated from each other by the middle portion (20aa1) of the body (10b), at least one of these end portions (20aa2, 20aa3) comprising a secondary lubrication groove (26) which is recessed in the external surface (20aa) and which has an elongate shape along the axis (Y) and which is fluidly independent of the main groove (24), the or each secondary groove (26) having a longitudinal dimension (L4) less than that (L3) of the main groove (24), the or each secondary groove (26) extending into the external surface (20aa) of the middle portion (20aa1) of the body (10b) to create an area of mutual overlap with the main groove (26),
and **in that** the body (10b) further comprises a secondary channel (27) for supplying oil to the or each secondary groove (26), which provides a fluid communication between the cavity (10c) and the secondary groove (26), said secondary channel (27) having a minimum passage cross-section smaller than that of the main channel (10d).

2. The plain bearing (11) according to claim 1, wherein the main (24) and secondary (26) grooves are straight and parallel.

3. The plain bearing (11) according to one of the preceding claims, wherein the or each secondary groove (26) has a longitudinal dimension (L4) less than half that (L3) of the main groove (24).

4. The plain bearing (11) according to one of the preceding claims, wherein the main channel (10d) has no restrictor.

5. The plain bearing (11) according to one of claims 1 to 4, wherein the or each secondary channel (27) comprises a restrictor (28) which is fitted and attached to the body (10d).

6. The plain bearing (11) according to one of the preceding claims, wherein the main channel (10d) is located substantially in the middle of the main groove (24), and the secondary channel (27) is located at a longitudinal end of the or each secondary groove (26), this longitudinal end being located on the side of the main groove (24).

7. The plain bearing (11) according to one of the preceding claims, wherein it comprises a main groove (24) and two secondary grooves (26), the two secondary grooves (26) being axially aligned with each other and being located at a predetermined distance (E) from the main groove.

8. The plain bearing (11) according to the preceding claim, wherein the distance (E) is less than or equal to a width (T3) of the main groove (24).

9. The plain bearing (11) according to one of the preceding claims, wherein the body of the plain bearing is in one-part.

10. The plain bearing (11) according to one of the preceding claims, wherein the main groove (24) has a width (T3) which is between 1.D1 and 2.D1, D1 being an internal diameter of said main channel (10d).

11. The plain bearing (11) according to one of the preceding claims, wherein the or each secondary groove (26) has a width (T4) which is between 1.D2 and 3.D2, D2 being an internal diameter of said secondary channel (27).

12. An assembly comprising a plain bearing (11) according to one of the preceding claims, and a planet gear (8) of mechanical reducer (6), this planet gear (8) comprising a tubular body having a main axis (Y) and comprising:
- at least one external toothing (8d) extending around the axis (Y), and
- an internal cylindrical surface (8a) extending around the axis (Y) over a major portion of an axial dimension of the body, this internal surface (8a) being configured to extend around the external surface (20aa) of the body (10b) of the plain bearing (11).

13. The assembly according to claim 12, wherein the internal surface (8a) of the body of the planet gear (8) has a length (L1) less than that (L2) of the external surface (20aa) of the body (10b) of the plain bearing (11), and wherein the main (24) and secondary (26) grooves extend over a longitudinal dimension (L5) of the body (10b) of the plain bearing (11) which is between 95%.L1 and 99%.L1, L1 being the length of the internal surface (8a) of the body of the planet gear (8).

14. A mechanical reducer (6) for a turbomachine, in particular for an aircraft, comprising a sun gear (7), a ring gear (9) extending around the sun gear (7), and assemblies as claimed in claim 12 or 13, the planet gears (8) of these assemblies being in mesh with the sun gear (7) and the ring gear (9).

15. A turbomachine (1), in particular for an aircraft, comprising a mechanical reducer (6) according to the preceding claim.
